Europäisches Patentamt

European Patent Office

Office européen des brevets

(19)

(11) **EP 1 658 954 A1**

(12) **EUROPEAN PATENT APPLICATION**
published in accordance with Art. 158(3) EPC

(43) Date of publication:
**24.05.2006 Bulletin 2006/21**

(51) Int Cl.:
*B29C 65/16* (1985.01)        *C08K 3/22* (1990.01)
*C08L 101/00* (1985.01)

(21) Application number: **04771693.1**

(22) Date of filing: **10.08.2004**

(86) International application number:
**PCT/JP2004/011732**

(87) International publication number:
**WO 2005/021245 (10.03.2005 Gazette 2005/10)**

(84) Designated Contracting States:
**CH DE FR GB IT LI**

(30) Priority: **27.08.2003 JP 2003303637**

(71) Applicant: **ORIENT CHEMICAL INDUSTRIES, LTD.**
**Osaka-shi,**
**Osaka 535-0022 (JP)**

(72) Inventors:
• **YAMAMOTO, Satoshi,**
**ORIENT CHEMICAL INDUSTRIES LTD.**
**Neyagawa-shi, Osaka 5728581 (JP)**

• **YUSHINA, Heihachi,**
**ORIENT CHEMICAL INDUSTRIES LTD.**
**Neyagawa-shi, Osaka 572858 (JP)**
• **KANISHI, Toshihiro,**
**ORIENT CHEMICAL INDUSTRIES LTD**
**Neyagawa-shi, Osaka 5728581 (JP)**

(74) Representative: **Jönsson, Hans-Peter**
**Von Kreisler Selting Werner,**
**Deichmannhaus am Dom,**
**Bahnhofsvorplatz 1**
**50667 Cologne (DE)**

(54) **METHOD FOR LASER WELDING**

(57)    A method for laser welding comprises:

forming a laser-transmissible resin workpiece 1 exhibiting whitish hue of white, gray or tint color out of a resin composition which includes 100 parts by weight of a thermoplastic resin and 0.1 to 2 parts by weight of white pigment having 2 to 2.8 of reflectance,

piling a resin workpiece 2 being at least partly capable of laser-absorption onto the laser-transmissible resin workpiece 1,

and then irradiating a laser beam 3 thereto to weld them thermally.

Fig. 1

**Description**

This invention relates to a method for laser welding of translucent or opaque resin workpieces exhibiting whitish hue of white, gray or tint color to join by a laser beam.

Laser welding, vibration welding, ultrasonic welding, clamping by bolts or adhering by adhesive material is executed to join thermoplastic resin workpieces.

Especially, the laser welding is executed for example as follows. A laser-transmissible resin workpiece is piled onto a laser-absorptive resin workpiece. A laser beam is irradiated from above, and transmits through the transmissible resin workpiece. The laser beam reaches to the absorptive resin workpiece, and is absorbed into there, and causes the exothermic. Both resin workpieces melted by the laser beam thermally are joined.

The laser welding has a merit of no threat of exposing of stress or overheating by vibration in comparison with the vibration welding or the ultrasonic welding. The other merits are feasibility of joining by irradiating the laser beam with a simple procedure, generating no burrs in the laser welding procedure, and causing sufficient welding strength and high yield of the resin workpieces even if it has complicated shape. Therefore, the laser welding is suitable to be executed in the manufacturing process of a precision instrument, electronic parts and a medical device that the resin workpieces should be joined precisely.

In Japanese Patent Provisional Publication Nos. 9-510930 and 11-170371, the methods for laser welding of a laser-transmissible resin workpiece that is transparent, colorless, non-colored or black-colored, and a laser-absorptive resin workpiece that is opaque or black-colored are mentioned for instance.

According to the previous method of the laser welding of the transparent laser-transmissible resin workpiece and the opaque laser-absorptive resin workpiece, the welded position has been visible unfortunately. Therefore usage has been practically limited.

According to the previous method of the laser welding of the laser-transmissible resin workpiece and the laser-absorptive resin workpiece having different color or same black respectively, the suitable hue thereof has been limited.

When the resin workpieces are welded by the laser welding to manufacture general products, it is very necessary that both resin workpieces, which are whitish, clean and pretty, are welded to accommodate to demand for customers.

If the laser welding of the previous white resin workpieces including the white pigment is executed, it is inadequate for the strength thereof because the pigment is easy to reflect and disperse the laser beam, and does not make the laser beam transmit sufficiently.

So a method for laser welding of the resin workpieces exhibiting same whitish hue to join prettily and strongly is desired.

The present invention has been developed to solve the foregoing problems.

It is an object of the present invention to provide a simple method for laser welding of translucent or opaque resin workpieces, that have high reflectance of visible rays and exhibit whitish hue of achromatic color such as white and gray, or tint color called pastel color such as pale red, pale blue, pale yellow and milk-white in appearance, to join by irradiating a laser beam.

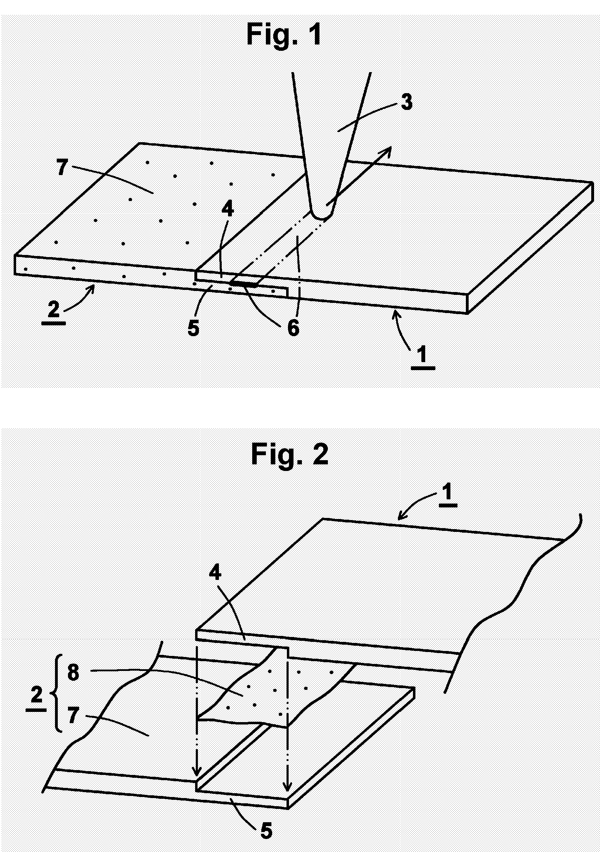

A method for laser welding of the present invention developed for accomplishing the foregoing object is explained with reference to Fig. 1 of an embodiment. The method for laser welding comprises:

forming a laser-transmissible resin workpiece 1 exhibiting whitish hue of white, gray or tint color out of a resin composition which includes 100 parts by weight of a thermoplastic resin and 0.1 to 2 parts by weight of white pigment having 2 to 2.8 of reflectance,

piling a resin workpiece 2 being at least partly capable of laser-absorption onto the laser-transmissible resin workpiece 1,

and then irradiating a laser beam 3 thereto to weld them thermally.

The laser-transmissible resin workpiece 1 including the white pigment within the range of the reflectance exhibits white vividly, distinctly and prettily, and has an excellent masking property even if the white pigment is a little.

Examples of the white pigment are zinc oxide, titanium oxide and/or antimony trioxide. An example of zinc oxide is C. I. Pigment White 4, an example of titanium oxide called titanium dioxide is C. I. Pigment White 6, and an example of antimony trioxide is C. I. Pigment White 11. They are commercially available as many kinds of chemicals on the market, and are chosen to use suitably. Especially titanium oxide having rutile structure is preferable. A surface treatment may be carried out to the white pigment.

If the amount of the white pigment is less than the range, the laser-transmissible resin workpiece 1 does not exhibit the whitish hue in appearance suitably. If the amount of the white pigment is more than the range, the laser-transmissible resin workpiece 1 is welded incompletely because the white pigment makes the laser-absorption quantity or the laser-reflection and laser-dispersion quantity increase, and the laser beam cannot transmit sufficiently on the occasion of the laser welding thereof. It is further preferable that 0.2 to 1.5 parts by weight of the white pigment are included.

In the method for the laser welding, the resin workpiece 2 being at least partly capable of the laser-absorption may be formed out of a resin composition which includes 99.1 to 98 parts by weight of a thermoplastic resin and 0.1 to 2 parts by weight of the above-mentioned white pigment having 2 to 2.8 of reflectance, and may exhibit whitish hue of white, gray or tint color.

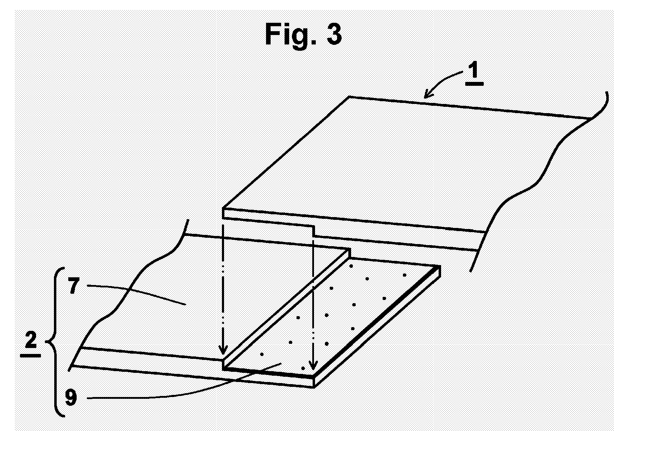

As shown in Figs. 2 or 3, the resin workpiece 2 being at least partly capable of the laser-absorption may comprise laser-absorptive layers 8 or 9 including a laser-absorbent being capable of laser-absorption under region of wavelength of 800 to 1200 nm at least partially, and a whitish resin material 7 that the layers 8 or 9 are applied thereto.

According to the method for the laser welding, a color difference: ΔE between the laser-transmissible resin workpiece 1 and the whitish resin material 7 of the resin workpiece 2 being at least partly capable of the laser-absorption is may be at most 0.3, preferably at most 0.2. By the method, the welded article of the workpiece 1 and 2 exhibiting the similar whitish hue is obtained simply.

When the laser-transmissible resin workpiece 1 includes no colorant except for the white pigment, it exhibits approximately pure white hue of high whiteness degree. So it is welded, as white workpiece.

When the laser-transmissible resin workpiece 1 includes a laser-transmissible colorant indicating yellow, red, blue, green or black with the white pigment, it exhibits whitish hue mixing of the hue of the colorant and the white hue of the white pigment in appearance. So it is welded, as whitish workpiece.

For instance, when the laser-transmissible resin workpiece 1 includes the black colorant, it exhibits the whitish hue of the achromatic color such as gray. When it includes the chromatic colorant indicating yellow, red, blue and green, it exhibits the whitish hue of the tint color called pastel color such as pale yellow or milk-white, pale red, pale blue and pale green.

Examples of the laser-transmissible colorant indicating yellow, red, blue, green and black in the method for the laser welding are known organic dyestuff or pigment such as azo dyestuff or pigment, metallized azo dyestuff or pigment, naphtholazo dyestuff or pigment, azolake dyestuff or pigment, azomethine dyestuff or pigment, anthraquinone dyestuff or pigment, quinacridone dyestuff or pigment, dioxazine dyestuff or pigment, diketopyrrolopyrrole dyestuff or pigment, anthrapyridone dyestuff or pigment, isoindolinone dyestuff or pigment, indanthrone dyestuff or pigment, perinone dyestuff or pigment, perylene dyestuff or pigment, indigo dyestuff or pigment, thioindigo dyestuff or pigment, quinophthalone dyestuff or pigment, quinoline dyestuff or pigment, benzimidazolone dyestuff or pigment and triphenylmethane dyestuff or pigment.

The exemplified colorant may be used solely or plurally with combining. Examples of the combination thereof are the green colorant mixing by the yellow colorant and the blue colorant; the violet colorant mixing by the blue colorant and the red colorant; the black colorant mixing by the yellow colorant and the violet colorant. The colorant may be commercially available as a master-batch, such as eBIND LTW-8170C, -8012, -8620C, -8730C, -8200, -8250C and -8300 that all are available from Orient Chemical Industries, Ltd.

With regard to the hue of the laser-transmissible resin workpiece in the method for the laser welding, the whiteness degree: $W_1$, that determined from the following numerical expression (I) using L-value, a-value and b-value of L*a*b* color specification, can be at least 50.

$$W_1 = 100 - \sqrt{(100-L)^2 + (a^2 + b^2)} \quad \cdots \quad (I)$$

The whiteness degree is an index for criterion of whiteness grade and masking property.

The resin workpiece having 60 to 80 of the whiteness degree is translucent or somewhat opaque with low masking power. The welded resin workpiece made from this one is suitable to manufacture product that requires fashionability and demand much. Especially it is suitable that this one indicates the tint color called pastel color such as pale red, pale blue, pale yellow and milk-white.

The resin workpiece having 80 or more, preferably 85 to 95 of the whiteness degree is opaque with high masking power. The welded resin workpiece is suitable to manufacture the product that requires to mask, to protect or to keep contents.

According to the method for the laser welding, the sufficient laser beam for the laser welding can transmit, because the laser-transmissible resin workpiece 1 includes suitable amount of the white pigment. Further it causes sufficient forming property and welding strength even if no filler is included.

And the method for the laser welding is used for a general purpose, because the sufficient laser beam for the laser welding can transmit even if the resin workpiece 1 includes an additive agent, that is easy to absorb or disperse the laser beam, such as the colorant, the filler improving the forming property and strength, and flame retarder in response to the usage and the purpose.

In the method it is preferable that the reflectance of the laser-transmissible resin workpiece is in the range of 1.5 to 1.8, because the laser-transmittance improves more.

It is preferable that an average particle size of the white pigment in the laser-transmissible resin workpiece is in the range of 100 to 300 nm, because the laser-transmissible resin workpiece makes the laser transmit sufficiently, it is translucent or opaque in appearance, and it causes pretty finishing of the laser welding. It is further preferable that average particle size thereof is in the range of 200 to 300 nm. When it is within the range, it causes high staining power. Further when the white pigment is included, it causes high whiteness degree.

With regard to the hue of the whitish resin material 7 of the resin workpiece 2 being at least partly capable of laser-absorption in the method for the laser welding, the whiteness degree: $W_2$ that determined from the following numerical expression (II) using L-value, a-value and b-value of L*a*b* color specification can be at least 80.

$$W_2 = 100 - \sqrt{(100-L)^2 + (a^2 + b^2)} \quad \cdots \quad (II)$$

As shown in Fig. 2, it is preferable that the laser-absorptive layer 8 is a resin film 8 including the above-mentioned laser-absorbent in the method for the laser welding.

As shown in Fig. 3, the laser-absorptive layer 9 in the method for the laser welding may be prepared by applying ink and/or paint including the above-mentioned laser-absorbent.

It is preferable that a principal solvent in the ink and/or the paint is an alcohol solvent or a glycol solvent. Concrete examples of the solvent are monohydric alcohol and dihydric alcohol are mentioned. Examples of monohydric alcohol are alcohol such as ethanol, n-propanol, isopropanol, n-butanol, amyl alcohol, benzyl alcohol, cyclohexanol and diacetone alcohol; glycol alkyl ether such as ethylene glycol monomethyl ether, ethylene glycol monoethyl ether, propylene glycol monomethyl ether, propylene glycol monoethyl ether, diethylene glycol monoethyl ether, diethylene glycol monobutyl ether and dipropylene glycol monoethyl ether; glycol acetate such as ethylene glycol monoacetate and propylene glycol monoacetate. Examples of dihydric alcohol are glycol such as ethylene glycol, diethylene glycol, triethylene glycol, tetraethylene glycol, polyethylene glycol, propylene glycol and butanediol.

The ink or the paint may include various additive agents such as a soluble resin, a dispersive resin, colorant, a dispersant, a solubility stabilizer, an antiseptics and a light stabilizer except for an interfering agent of the laser welding of the resin workpieces in response to the use and the purpose.

In the method for the laser welding, it is preferable that the laser-absorbent is carbon black and/or nigrosine.

In the method of the laser welding, the laser-transmissible resin workpiece makes the laser beam transmit at least 10 %, and the laser beam for the laser welding has wavelength that is in the range from approximate 800 nm of semiconductor laser to approximate 1100 nm of the yttrium aluminum garnet (YAG) laser. And it is preferable that the infrared-transmissivity is at least 15% under wavelengths of 808 nm, 840 nm, 940 nm and 1064 nm. If the transmissivity is less than the range, the sufficient laser beam of those wavelengths does not transmit. So the strength of the welded workpieces is insufficient, or unusual excess energy of the laser beam is necessary.

In the method of the laser welding, it is preferable that the laser beam is irradiated with scanning, and furnishes an energy quantity: x (J/mm) that satisfies the following numerical expression (III)

$$x = \frac{p \times T}{100 \times q} \geqq 0.9 \quad \cdots \quad (III)$$

[in the numerical expression (III), p (W) is the output power of the laser beam; q (mm/sec.) is the scanning speed of the laser beam; T is laser-transmissivity of the laser-transmissible resin workpiece under the wavelength of the laser beam].

According to the method for the laser welding by irradiating the laser beam, the translucent or opaque resin workpieces having high reflectance and exhibiting whitish hue of achromatic color such as white and gray, or a tint color called pastel color such as pale red, pale blue, pale yellow and milk-white in appearance, is welded simply. Further the welded workpieces having a little color difference between the laser-transmissible resin workpiece and the laser-absorptive resin workpiece are obtained.

In the method, the laser welding of the workpieces such as housings made from the whitish thermoplastic resin, that should avoid the thermal or vibratory influence to join precisely, is executed by simple procedure certainly.

According to the method for the laser welding, both workpieces having exquisite and complicated shape can be simply welded with high airtightness, good reproductivity, sufficient strength and high yield. The both whitish workpieces are welded, so comprehensive products exhibiting the whitish in appearance, that are finished prettily to accommodate to the demand for customers, are obtained.

The method for the laser welding causes no need of contact of the laser beam source and the position of the workpieces being due to weld, exposing to no stress of mechanical vibration, generating of no dust, little thermal influence of periphery by the local exothermic, difficulty of recognizing a boundary line of the welding by visual observation, and pretty finishing.

Fig. 1 shows the method for the laser welding of the present invention of both of the laser-transmissible resin workpiece made from the laser-transmissible resin composition and the laser-absorptive resin workpiece on its way.

Fig. 2 shows constitution of the laser-transmissible resin workpiece and the laser-absorptive resin workpiece in order to execute the method for the laser welding of the present invention.

Fig. 3 shows another constitution of the laser-transmissible resin workpiece and the laser-absorptive resin workpiece in order to execute the method for the laser welding of the present invention.

Hereunder, the embodiments of the method for the laser welding of the present invention are explained in detail.

An example of the method for the laser welding of the laser-transmissible resin workpiece 1 and the resin workpiece 2 being at least partly capable of laser-absorption having the laser-absorptive layer 8 including the laser-absorbent is explained as shown in Fig. 2.

First of all, the laser-transmissible resin workpiece 1 was prepared as follows. The thermoplastic resin, the white pigment and the additive agent such as the colorant if necessary were mixed by a blender to prepare the laser-transmissible resin composition. The composition was molded by a method such as extrusion molding, injection molding and compression molding to obtain a plate of the laser-transmissible resin workpiece 1 having a stair 4 that lacked half thickness under side of one terminal thereof.

Another composition was prepared from thermoplastic resin, and the additive agent such as the white pigment or the colorant and the laser-absorbent if necessary. The composition was molded to obtain a plate of the whitish resin material 7 having a stair 5 that lacked half thickness upper side of one terminal thereof and being to include the laser-absorbent.

Then the thermoplastic resin, the laser-absorbent that absorbs the laser beam of the wavelength for the laser welding, and the additive agent such as the colorant if necessary were mixed with the blender. It was molded by the method such as injection molding and extrusion molding to obtain a resin film 8 including the laser-absorbent as shown in Fig. 2.

The resin film 8 and the stair 5 of the above-mentioned whitish resin material 7 were put together using a fixture or a pressure device to obtain the resin workpiece 2 being partly capable of laser-absorption.

As shown in Fig. 2, the stair 4 of the laser-transmissible resin workpiece 1 and the stair 5 of the laser-absorptive resin workpiece 2 were piled through the resin film 8 of the laser-absorptive layer. The laser beam 3 was irradiated from above to an upper side of the laser-transmissible resin workpiece 1 referring to Fig. 1. A part of the laser beam 3 transmitted through the stair 4 of the laser-transmissible resin workpiece 1, and reached to the resin film 8 having the laser-absorptive property. The laser beam was absorbed into the resin film 8 having high absorption efficiency to cause exothermic efficiently. The laser-transmissible resin workpiece 1 and the whitish resin material 7 of the laser-absorptive resin workpiece 2 were melted by the exothermic to fuse them through the resin film 8. After cooling, the laser-transmissible resin workpiece 1 and the laser-absorptive resin workpiece 2 through the resin film 8 were firmly joined with sufficient welding strength at a welded position 6 thereof.

In the embodiment, it is significant that thickness of the resin film 8 is adjusted appropriately in consideration of an amount of energy of the irradiating the laser beam, laser absorptivity of the resin film 8, choice of the resin material of the laser-transmissible resin workpiece that is easy to carry out the laser welding, choice of the additive agent or the colorant that does not obstruct the laser welding, and a shape of the laser-transmissible resin workpiece.

An advantage of the embodiment is that the raw resin material of the whitish resin material 7 of the laser-absorptive resin workpiece 2 is chosen appropriately without consideration of the resin having the laser-transmissible or laser-absorptive property because the resin film 8 includes the laser-absorbent.

And another advantage thereof is that both raw resin material of the laser-transmissible resin workpiece 1 and the resin workpiece 2 being at least partly capable of laser-absorption may be same or different. Consequently the color difference: ∆E between the laser-transmissible resin workpiece 1 and the whitish resin material 7 of the laser-absorptive resin workpiece 2 can be at most 0.3. Further, the finishing thereof is pretty even if the resin film 8 includes the economical blackish laser-absorbent such as carbon black, aniline black and nigrosine because the resin film 8 is masked by the laser-transmissible resin workpiece 1 to be not visible.

The method for the laser welding shown in Fig. 2 is explained above.

In another method as shown in Fig. 3, the laser welding of the resin workpiece 2 being partly capable of laser-absorption having the applied layer 9 as the laser-absorptive layer of the ink and/or the paint including the laser-absorbent, and the laser-transmissible resin workpiece 1 may be executed.

On the other way, the method for the laser welding may be executed as follows without illustrating of the Figs. The ink and/or the paint were applied on the stair 4 of the laser-transmissible resin workpiece 1 to form the laser-absorptive layer 9 beforehand. Then it is piled onto the stair 5 of the whitish resin material 7 to form the resin workpiece 2 being at least partly capable of laser-absorption and the resin workpiece 1.

For example, the applied layer 9 as the laser-absorptive layer is prepared by applying of the ink and/or the paint including the laser-absorbent and the resin if necessary. The applying thereof is executed by an arbitrary applying procedure such as spraying, coating by a marking pen, a painting brush, a writing brush and so on. It is preferable that thickness of the applied layer 9 is 0.1 mm or less.

As shown in Fig. 1, the method for the laser welding may be executed as follows. The thermoplastic resin, the white pigment, the colorless or essentially colorless laser-absorbent that absorbs the laser beam having the wavelength for laser welding, the additive agent such as the colorant if necessary are mixed with a blender. And it is molded to obtain the resin workpiece 2 having laser-absorptive property as a whole. The above-mentioned white laser-transmissible resin workpiece 1 including the white pigment is piled onto the workpiece 2 and then the laser beam is irradiated to execute the laser welding. Examples of the colorless or essentially colorless laser-absorbent are a square acid derivative and immonium dyestuff.

The method for the laser welding may be executed as follows. The gray laser-transmissible resin workpiece including the white pigment and the black laser-transmissible colorant is piled onto the gray laser-absorptive resin workpiece including the white pigment and the black laser-absorbent, and then the laser beam is irradiated to execute the laser welding. Example of the black laser-transmissible colorant is the master-batch of the black colorant such as eBIND LTW-8170C, -8012, -8620C, -8730C, -8200, -8250C and -8300 that all are available from Orient Chemical Industries, Ltd. Examples of the black laser-absorbent are carbon black, aniline black and nigrosine.

The method for the laser welding may be executed as follows. The tint laser-transmissible resin workpiece including the white pigment and the chromatic laser-transmissible colorant indicating color such as yellow, red, blue and green is piled onto the tint laser-absorptive resin workpiece including the white pigment and the chromatic colorant and the colorless or essentially colorless laser-absorbent, and then the laser beam is irradiated to execute the laser welding. Examples of the chromatic laser-transmissible colorant are yellow quinophthalone-type dyestuff, red perinone-type dyestuff, yellow, red, green, blue or violet anthraquinone-type dyestuff.

The method for the laser welding may be executed as follows. The tint laser-transmissible resin workpiece including the white pigment and the chromatic colorant indicating color such as yellow, red, blue and green is piled onto the tint laser-absorptive resin workpiece including the white pigment and the chromatic laser-absorbent, and then the laser beam is irradiated to execute the laser welding. Examples of the chromatic laser-absorbent are blue or green phthalocyanine-type dyestuff or pigment, anthraquinone-type dyestuff or pigment that absorbs the laser beam of 808 nm of wavelength.

The method may be executed as follows. The laser-transmissible resin workpiece exhibiting pastel color and the tint laser-absorptive resin workpiece exhibiting different pastel color that includes the white pigment and the chromatic laser-absorbent.

In the all above-mentioned methods for the laser welding, examples of the thermoplastic resin of the laser-transmissible resin workpiece are polyamide resin, polyethylene resin, polypropylene resin, polybutylene terephthalate resin, polyethylene terephthalate resin, polyphenyl sulfide resin, polyether-ether-ketone resin, polycarbonate resin, liquid crystal polymer, polystyrene resin, acrylic resin, polyacetal resin, polyphenyl-ether resin, acrylonitrile-styrene copolymer resin, acrylonitrile-butadiene-styrene copolymer resin. They are used solely, or they are used to mix plurally. It is preferable that the thermoplastic resin is polyamide resin, polypropylene resin or polycarbonate resin. The thermoplastic resin may be copolymer including principally the above-mentioned resin or mixture thereof; mixture of the resin and rubber or elastomer such as rubber-like resin; polymer alloy including 10 % by the weight or more of the resin.

The thermoplastic resin having excellent laser-transmissible property that composes the laser-transmissible resin workpiece is chosen from the resins appropriately.

The resin workpiece may include a proper additive agent in response to a use and a purpose. Examples of the additive agent are a filler and a flame retarder.

Examples of the filler are talc, mica, calcium hydrogencarbonate, calcium carbonate, glass fiber, glass flake, glass beads, wollastonite, barium sulfate. The filler improves forming property and strength. It is preferable that 5 to 50 parts by weight of the filler is included to 100 parts by weight of the thermoplastic resin. The whitish filler is preferable. The glass fiber is more preferable in terms of the laser-transmissible property. It is preferable that length of the glass fiber is in range of 2 to 15 mm and a diameter thereof is in range of 1 to 20 microns. A shape of the glass fiber is not intended to be limited. Examples of the shape thereof are roving, milled fiber and so on. The glass fiber is used solely or plurally.

The flame retarder is mentioned as known one. Concrete examples of the flame retarder are halogen-containing compound such as tetrabromobisphenol A derivative, hexabromodiphenyl ether and tetrabromophthalic anhydride; phosphorus-containing compound such as triphenylphosphate, triphenylphosphite, red phosphorus and ammonium polyphosphate; nitrogen-containing compound such as urea and guanidine; silicon-containing compound such as silicone oil, organic silane and aluminum silicate; antimony compound such as antimony trioxide and antimony phosphate.

Other examples of the additive agent are an auxiliary coloring agent, a dispersant, a stabilizer, a plasticizer, a reforming agent, an ultraviolet-absorbent or a light-stabilizer, an antioxidant, an antistatic agent, a lubricant, a mold releasing agent, a crystallization accelerator, a crystalline germ agent, an elastomer for improvement of shock resistance and so on. It is preferable that the 0.1 to 1.0 parts by weight of the additive agent is included to 100 parts by weight of the thermoplastic resin.

The laser-absorptive resin workpiece may be formed out of the same or different resin component of the laser-transmissible resin workpiece without consideration of the laser-transmissible property. The thermoplastic resin, the white pigment and/or various colorants and the other additive agent mentioned as components of the laser-transmissible resin workpiece are used for the laser-absorptive resin workpiece similarly. The amount of the white pigment in the laser-absorptive resin workpiece may be excess than the amount of the pigment in laser-transmissible resin workpiece. It is preferable that amount of the white pigment in the laser-absorptive resin workpiece is equal with the amount of the pigment in the laser-transmissible resin workpiece because of obtaining the welded workpieces having no color difference. Further, the additive agent such as the filler for improvement of the forming property and the welding strength, and the flame retarder may be included. Furthermore, the additive agent such as the auxiliary coloring agent, the dispersant, a stabilizer, the plasticizer, the reforming agent, an ultraviolet-absorbent or the light-stabilizer, the antioxidant, the antistatic agent, the lubricant, the mold releasing agent, the crystallization accelerator, the crystalline germ agent, the elastomer for improvement of shock resistance and so on may be included in response to the usage and the purpose.

Examples of the absorbent in the laser-absorptive resin workpiece are carbon black, nigrosine, aniline black, phthalocyanine, naphthalocyanine, porphyrin, cyanin-type derivative, perylene, quaterrylene, metal complex, azo dyestuff, anthraquinone, square acid derivative , immonium dyestuff and so on. Especially, carbon black and/or nigrosine are preferable because it is economical and very stable.

It is preferable that the laser-transmissible resin workpiece and the laser-absorptive resin workpiece are prepared by the following molding procedures. The pellets or powder made of the transparent thermoplastic resin, and the white pigment and the granulated colorant or the other additive agent if necessary, are mixed by the blender. And then it is molded. Examples of the molding procedure are injection molding, extrusion molding, compression molding, foaming molding, blow molding, vacuum molding, injection blow molding, rotational molding, calendaring molding, solution casting and so on.

Hereunder, manufacturing examples applying the present invention of the test pieces as laser-transmissible resin workpieces, that are manufactured by molding the prepared laser-transmissible resin composition, are explained concretely. Incidentally, the test pieces in the manufacturing examples were used for intermediate test piece of laser-absorptive resin workpiece having the layer that includes the laser-absorbent, too.

In the Manufacturing Examples 1 to 7, the resin compositions were prepared, and the test pieces as the laser-transmissible resin workpiece 1 having 50 to 80 of the whiteness degree were manufactured.

(Manufacturing Example 1) Manufacturing of the test piece (A) as laser-transmissible resin workpiece

1000 g of the polypropylene resin of catalog No. BC05B that is available from Japan Polychem Co., Ltd. and 12 g of titanium oxide treated on the surface thereof by aluminum laurate of catalog No. MT-100S that is available from Tayca Corporation were added in the tumbler made of stainless steel, and mixed with stirring for 1 hour to prepare the composition. The obtained composition was executed by injection molding at 220 degrees Centigrade of temperature of a cylinder and 40 degrees Centigrade of temperature of a metal mold with general procedures using the injection molding machine of catalog No. Si-50 that is available from Toyo Machinery & Metal Co., Ltd. to manufacture the test piece (A) of plate having the length of 70 mm, the width of 18 mm and the thickness of 4 mm with the proviso of the end portion having the stair 4 of the thickness of 2 mm and the length of 20 mm from the edge by lacking an under side thereof as shown in Fig. 2. The surface and appearance thereof were glossy, regular and exhibited the hue of white uniformly. The refractive index is determined in accordance with Japanese Industrial Standards K-7142: the method for determination of the refractive index of plastics using Abbe refractive index. The refractive index is 1.67.

(Manufacturing Examples 2 to 5) Manufacturing of the test pieces (B), (C), (D) and (E) as laser-transmissible resin workpiece

The procedures were executed as same as Manufacturing Example 1 except for using 36 g of the same titanium oxide of Manufacturing Example 1 under Manufacturing Example 2; 24 g of zinc oxide of catalog No. MZ-303 that is available from Tayca Corporation under Manufacturing Example 3; 24 g of antimony trioxide of catalog No. KN that is available from Sakai Chemical Industry Co., Ltd. under Manufacturing Example 4; and 36 g of antimony trioxide of catalog No. KN that is available from Sakai Chemical Industry Co., Ltd. under Manufacturing Example 5 instead of specified titanium oxide of Manufacturing Example 1 to manufacture the test pieces (B), (C), (D) and (E). The surface and appearance thereof were glossy, regular and exhibited the hue of white uniformly.

**EP 1 658 954 A1**

(Manufacturing Example 6) Manufacturing of the test piece (F) as laser-transmissible resin workpiece

1000 g of the polycarbonate resin of catalog No. LEXAN 1000 Flame-retardancy grade: V-0 that is available from Japan G. E. Plastics and 12 g of titanium oxide of catalog No. MT-100S that is available from Tayca Corporation were added in the tumbler made of stainless steel, and mixed with stirring for 1 hour to prepare the composition. The obtained composition was executed by injection molding at 290 degrees Centigrade of temperature of the cylinder and 80 degrees Centigrade of temperature of a metal mold with general procedures using the injection molding machine of catalog No. Si-50 that is available from Toyo Machinery & Metal Co., Ltd. to manufacture the test piece (F) of plate having the length of 70 mm, the width of 18 mm and the thickness of 4 mm with the proviso of the end portion having the stair 4 of the thickness of 2 mm and the length of 20 mm from the edge by lacking an under side thereof as shown in Fig. 2. The surface and appearance thereof were glossy, regular and exhibited the hue of white uniformly.

(Manufacturing Example 7) Manufacturing of the test piece (G) as laser-transmissible resin workpiece

1000 g of the polyamide 66 resin of catalog No. ZYTEL101 that is available from Du Pont and 12 g of titanium oxide of catalog No. MT-100S that is available from Tayca Corporation were added in the tumbler made of stainless steel, and mixed with stirring for 1 hour to prepare the composition. The obtained composition was executed by injection molding at 280 degrees Centigrade of temperature of the cylinder and 60 degrees Centigrade of temperature of the metal mold with general procedures using the injection molding machine of catalog No. Si-50 that is available from Toyo Machinery & Metal Co., Ltd. to manufacture the test piece (G) of plate having the length of 70 mm, the width of 18 mm and the thickness of 4 mm with the proviso of the end portion having the stair 4 of the thickness of 2 mm and the length of 20 mm from the edge by lacking an under side thereof as shown in Fig. 2. The surface and appearance thereof were glossy, regular and exhibited the hue of white uniformly.

The determination of the transmissivity, determination of the whiteness degree and observation of the hue of the manufactured test pieces made in the above-mentioned Manufacturing Examples were evaluated physically.

(Determination of the transmissivity)

Each manufactured test piece was set up onto a spectrophotometer of catalog No. V-570 that is available from JASCO Corporation. The transmissivity of a portion with the thickness of 2 mm of the stair 4 of the test piece that is shown in Fig. 2 was determined under the wavelength λ ranging from 400 to 1200 nm of the irradiated laser beam. The results of the transmissivity thereof under the wavelength of 808 nm are shown in Table 1.

(Determination of the whiteness degree)

The L-value, a-value and b-value of L*a*b* color specification at the portion with the thickness of 2 mm of the stair 4 of the test piece that is shown in Fig. 2 was determined by a color difference meter of catalog No. JP7000 that is available from JUKI Corporation. The whiteness degree: $W_1$ was calculated by the following expression (I).

$$W_1 = 100 - \sqrt{(100-L)^2 + (a^2 + b^2)} \quad \cdots \quad (I)$$

The results are shown in Table 1.

(Observation of the hue)

The hue of each manufactured test piece was observed by visual observation. The results are shown in Table 1.

Table 1

| | Manufactured Test Piece | Transmissivity (%) | Whiteness Degree: $W_1$ | Hue |
|---|---|---|---|---|
| Manufacturing Example 1 | Manufactured Test Piece(A) | 41 | 73 | White |
| Manufacturing Example 2 | Manufactured Test Piece(B) | 40 | 66 | White |
| Manufacturing Example 3 | Manufactured Test Piece(C) | 44 | 62 | White |
| Manufacturing Example 4 | Manufactured Test Piece(D) | 39 | 65 | White |

8

Table continued

| | Manufactured Test Piece | Transmissivity (%) | Whiteness Degree: $W_1$ | Hue |
|---|---|---|---|---|
| Manufacturing Example 5 | Manufactured Test Piece(E) | 38 | 66 | White |
| Polypropylene Resin, Used in Manufacturing Examples 1 to 5 | | 45 | 60 | |
| Manufacturing Example 6 | Manufactured Test Piece(F) | 30 | 74 | White |
| Polycarbonate Resin, Used in Manufacturing Example 6 | | 35 | 74 | |
| Manufacturing Example 7 | Manufactured Test Piece(G) | 37 | 71 | White |
| Polyamide Resin, Used in Manufacturing Example 7 | | 68 | 55 | |

In the Manufacturing Examples 8 to 11, the resin composition was prepared, and the test piece as the laser-transmissible resin workpiece 1 having at least 80 of the whiteness degree was manufactured.

(Manufacturing Example 8) Manufacturing of the test piece (H) as laser-transmissible resin workpiece

1000 g of the polypropylene resin of catalog No. BC05B that is available from Japan Polychem Co., Ltd. and 4.7 g of the master-batch of titanium oxide: the master-bach of polypropylene resin including 70% by weight of rutile-structural titanium oxide of catalog No. PP1KB662 that is available from Toyo Ink MFG. Co., Ltd. were added in the tumbler made of stainless steel, and mixed with stirring for 1 hour to prepare the composition. The obtained composition was executed by injection molding at 220 degrees Centigrade of temperature of the cylinder and 40 degrees Centigrade of temperature of the metal mold with general procedures using the injection molding machine of catalog No. Si-50 that is available from Toyo Machinery & Metal Co., Ltd. to manufacture the test piece (H) of plate having the length of 70 mm, the width of 18 mm and the thickness of 4 mm with the proviso of the end portion having the stair 4 of the thickness of 2 mm and the length of 20 mm from the edge by lacking an under side thereof as shown in Fig. 2. The surface and appearance thereof were glossy, regular and exhibited the hue of white uniformly.

(Manufacturing Examples 9 to 11) Manufacturing of the test pieces (I), (J) and (K) as laser-transmissible resin workpiece

The procedures were executed as same as Manufacturing Example 8 except for using 7 g of the same master-batch of the rutile-structural titanium oxide of Manufacturing Example 8 under Manufacturing Example 9; 6 g of rutile-structural titanium oxide of catalog No. JR-605 that is available from Tayca Corporation under Manufacturing Example 10; and 9 g of titanium oxide of catalog No. JR-605 that is available from Tayca Corporation under Manufacturing Example 11 instead of the master-batch of rutile-structural titanium oxide of Manufacturing Example 8 to manufacture the test pieces (I), (J) and (K). The surface and appearance thereof were glossy, regular and exhibited the hue of white uniformly.

(Comparative Manufacturing Example 1)

1000 g of the polypropylene resin of catalog No. BC05B that is available from Japan Polychem Co., Ltd. and 30 g of titanium oxide of catalog No. JR-605 that is available from Tayca Corporation were added in the tumbler made of stainless steel, and mixed with stirring for 1 hour to prepare the composition. The obtained composition was executed by injection molding at 220 degrees Centigrade of temperature of the cylinder and 40 degrees Centigrade of temperature of the metal mold with general procedures using the injection molding machine of catalog No. Si-50 that is available from Toyo Machinery & Metal Co., Ltd. to manufacture the comparative test piece (a) of plate having the length of 70 mm, the width of 18 mm and the thickness of 4 mm with the proviso of the end portion having the stair 4 of the thickness of 2 mm and the length of 20 mm from the edge by lacking an under side thereof as shown in Fig. 2. The surface and appearance thereof were glossy, regular and exhibited the hue of white uniformly.

Table 2

| | Manufactured Test piece | Transmissivity (%) | Whiteness Degree: $W_1$ | Hue |
|---|---|---|---|---|
| Manufacturing Example 8 | Manufactured Test Piece(H) | 27 | 88 | White |
| Manufacturing Example 9 | Manufactured Test Piece(I) | 20 | 92 | White |
| Manufacturing Example 10 | Manufactured Test Piece(J) | 21 | 90 | White |

Table continued

| | Manufactured Test piece | Transmissivity (%) | Whiteness Degree: $W_1$ | Hue |
|---|---|---|---|---|
| Manufacturing Example 11 | Manufactured Test Piece(K) | 17 | 93 | White |
| Comparative Manufacturing Example 1 | Comparative Manufactured Test Piece(a) | 6 | 96 | White |
| Polypropylene Resin, Used in Manufacturing Examples 8 to 11 and Comparative Manufacturing Example | | 45 | 60 | |

In the Manufacturing Examples 12 to 15, the laser-transmissible polypropylene resin compositions including the additive agent were prepared, and the test pieces as the laser-transmissible resin workpiece 1 were manufactured.

(Manufacturing Example 12) Manufacturing of the test piece (L) as laser-transmissible resin workpiece

The procedure was executed as same as Manufacturing Example 1 except for using 1000 g of the polypropylene resin including glass fiber of catalog No. HG30U that is available from Japan Polychem Co., Ltd. and 9 g of titanium oxide of catalog No. JR-403 that is available from Tayca Corporation instead of specified polypropylene resin and titanium oxide of Manufacturing Example 1 to manufacture the test piece (L). The surface and appearance thereof were glossy, regular and exhibited the hue of white uniformly.

Table 3

| | Manufactured Test Piece | Transmissivity (%) | Whiteness Degree: $W_1$ | Hue |
|---|---|---|---|---|
| Manufacturing Example 12 | Manufactured Test Piece(L) | 10 | 90 | White |
| Polypropylene Resin including Glass Fiber, Used in Manufacturing Example 12 | | 41 | 64 | |

(Manufacturing Examples 13 to 15) Manufacturing of the test pieces (M), (N) and (O) as laser-transmissible resin workpiece

The procedures were executed as same as Manufacturing Example 1 except for using 3 g of titanium oxide of catalog No. MT-100S that is available from Tayca Corporation and 1 g of the black master-batch including the laser-transmissible colorant of catalog No. eBIND LTW-8170 that is available from Orient Chemical Industries, Ltd. under Manufacturing Example 13; 3 g of titanium oxide of catalog No. MT-100S that is available from Tayca Corporation and 0.03 g of the colorant: Nubian Yellow of catalog No. PO-1100 that is available from Orient Chemical Industries, Ltd. under Manufacturing Example 14; 3 g of titanium oxide of catalog No. JR-605 that is available from Tayca Corporation and 0.03 g of the colorant: Nubian Yellow of catalog No. PO-1100 that is available from Orient Chemical Industries, Ltd. under Manufacturing Example 15 instead of specified titanium oxide of Manufacturing Example 1 to manufacture the test pieces (M), (N) and (O). The surface and appearance thereof were glossy, regular and exhibited the whitish hue uniformly.

Table 4

| | Manufactured Test Piece | Transmissivity (%) | Whiteness Degree: $W_1$ | Hue |
|---|---|---|---|---|
| Manufacturing Example 13 | Manufactured Test Piece (M) | 43 | 39 | Bluish Gray |
| Manufacturing Example 14 | Manufactured Test Piece (N) | 44 | 46 | Pale Yellow |
| Manufacturing Example 15 | Manufactured Test Piece (O) | 31 | 76 | Pale Yellow |
| Polypropylene Resin, Used in Manufacturing Examples 13 to 15 | | 45 | 60 | |

In the Manufacturing Examples 16 to 17, the laser-transmissible polycarbonate resin compositions including the additive agent were prepared, and the test pieces as the laser-transmissible resin workpiece 1 were manufactured.

(Manufacturing Example 16) Manufacturing of the test piece (P) as laser-transmissible resin workpiece

1000 g of the polycarbonate resin of catalog No. LEXAN 1000 Flame-retardancy grade: V-0 that is available from Japan G. E. Plastics and 3 g of titanium oxide of catalog No. MT-100S that is available from Tayca Corporation were added in the tumbler made of stainless steel, and mixed with stirring for 1 hour to prepare the composition. The obtained composition was executed by injection molding at 290 degrees Centigrade of temperature of the cylinder and 80 degrees Centigrade of temperature of the metal mold with general procedures using the injection molding machine of catalog No. Si-50 that is available from Toyo Machinery & Metal Co., Ltd. to manufacture the test piece (P) of plate having the length of 70 mm, the width of 18 mm and the thickness of 4 mm with the proviso of the end portion having the stair 4 of the thickness of 2 mm and the length of 20 mm from the edge by lacking an under side thereof as shown in Fig. 2. The surface and appearance thereof were glossy, regular and exhibited the hue of white uniformly.

(Comparative Manufacturing Example 2)

The procedure was executed as same as Manufacturing Example 16 except for using 1000 g of the polycarbonate resin of catalog No. LEXAN 1000 and 36 g of titanium oxide of catalog No. JR-605 that is available from Tayca Corporation instead of using polycarbonate resin and 3 g of titanium oxide of Manufacturing Example 16 to manufacture the comparative test piece (b). The surface and appearance thereof were glossy, regular and exhibited the hue of white uniformly.

(Manufacturing Example 17) Manufacturing of the test piece (Q) as laser-transmissible resin workpiece

The procedure was executed as same as Manufacturing Example 16 except for using 3 g of titanium oxide of catalog No. MT-100S that is available from Tayca Corporation and 1 g of the black master-batch including the laser-transmissible colorant of catalog No. eBIND LTW-8300 that is available from Orient Chemical Industries, Ltd. instead of using titanium oxide of Manufacturing Example 16 to manufacture the test piece (Q). The surface and appearance thereof were glossy, regular and exhibited the hue of reddish-gray uniformly.

Table 5

| | Manufactured Test Piece | Transmissivity (%) | Whiteness Degree: $W_1$ | Hue |
|---|---|---|---|---|
| Manufacturing Example 16 | Manufactured Test Piece(P) | 32 | 74 | White |
| Comparative Manufacturing Example 2 | Comparative Manufactured Test Piece(b) | 7 | 94 | White |
| Manufacturing Example 17 | Manufactured Test Piece(Q) | 30 | 39 | Red-dish - gray |
| Polycarbonate Resin, Used in Manufacturing Examples16 to 17and Comparative Manufacturing Example | | 35 | 74 | |

In the Manufacturing Example 18, the laser-absorptive resin workpiece as the whitish test piece for the laser-absorptive resin workpiece was manufactured.

(Manufacturing Example 18) Manufacturing of the test piece (R) as laser-absorptive resin workpiece

400 g of the polypropylene resin of catalog No. BC05B that is available from Japan Polychem Co., Ltd., 3.6 g of the titanium oxide of catalog No. JR-605 that is available from Tayca Corporation, 0.4 g of carbon black of catalog No. CB960 that is available from Mitsubishi Chemical Corporation were added in the tumbler made of stainless steel, and mixed with stirring for 1 hour to prepare the composition. The obtained composition was executed by injection molding at 220 degrees Centigrade of temperature of the cylinder and 40 degrees Centigrade of temperature of the metal mold with general procedures using the injection molding machine of catalog No. Si-50 that is available from Toyo Machinery & Metal Co., Ltd. to manufacture the test piece (R) of plate for the laser-absorptive resin workpiece 2 having the length of 70 mm, the width of 18 mm and the thickness of 4 mm with the proviso of the end portion having the stair 5 of the thickness of 2 mm and the length of 20 mm from the edge by lacking an upper side thereof as shown in Fig. 2. The surface and appearance thereof were glossy, regular and exhibited the hue of gray uniformly.

In the Manufacturing Example 19, the laser-absorptive resin workpieces 2 having the laser-absorptive layer 8 of the resin film including carbon black as the test piece (S) was manufactured.

(Manufacturing Examples 19 to 21) Manufacturing of the test pieces (S), (T) and (U) as laser-absorptive resin workpiece

400 g of the polypropylene resin of catalog No. BC05B that is available from Japan Polychem Co., Ltd. and 0.8 g of carbon black of catalog No. CB960 that is available from Mitsubishi Chemical Corporation were added in the tumbler made of stainless steel, and mixed with stirring for 1 hour to prepare the composition. The obtained composition was executed by injection molding at 220 degrees Centigrade of temperature of the cylinder and 40 degrees Centigrade of temperature of the metal mold with general procedures using the above-mentioned injection molding machine having the metal mold for thin resin film of catalog No. Si-50 that is available from Toyo Machinery & Metal Co., Ltd. to manufacture the resin film including carbon black.

The film was put onto the stair 5 of the manufactured test piece in the above-mentioned Manufacturing Examples as shown in Fig. 2 to obtain the other manufactured test pieces as the laser-absorptive resin workpiece 2.

The following test pieces as the laser-absorptive resin workpiece 2 were manufactured.

(1) The manufactured test piece (S) of Manufacturing Example 19 was combined with the resin film including carbon black and the test piece (J) manufactured as the laser-transmissible resin workpiece.

(2) The manufactured test piece (T) of Manufacturing Example 20 was combined with the resin film including carbon black and the test piece (M) manufactured as the laser-transmissible resin workpiece.

(3) The manufactured test piece (U) of Manufacturing Example 21 was combined with the resin film including carbon black and the test piece (F) manufactured as the laser-transmissible resin workpiece.

In the Manufacturing Examples 22 to 26, the alcoholic ink including the laser-absorbant for the marking pen was prepared, and then it was applied onto the above-mentioned the manufactured test piece (R) to manufacture the resin pieces (V), (W), (X), (Y) and (Z) as the laser-absorptive resin workpiece 2 having the laser-absorptive layer 9.

(Manufacturing Examples 22 to 26) Manufacturing of the test pieces (V), (W), (X), (Y) and (Z) as laser-absorptive resin workpiece

6 parts by weight of nigrosine base EX
69 parts by weight of ethanol
5 parts by weight of benzyl alcohol
10 parts by weight of oleic acid
10 parts by weight of ketone resin

The above compounds were mixed and dissolved at 40 degrees Centigrade homogeneously, to prepare the ink.

The elapse stability test of the ink was executed by keeping in a low/high temperature bath of catalog No. INCUBATOR that is available from Sanyo Electric Co., Ltd. It is recognized that the dyestuff did not deposit, and viscosity thereof did not increase after 3 months keeping.

The ink was filled up in shell of the marking pen. The ink was applied onto the stair 5 of the above-mentioned manufactured test piece as the resin material of the resin workpiece as shown in Fig. 3, to manufacture the test piece as the laser-absorptive resin workpiece 2 having the uniform and pretty laser-absorptive layer 9.

(1) The manufactured test piece (V) in Manufacturing Example 22, was applied with the marking ink onto the test piece (K) manufactured as the laser-transmissible resin workpiece.
(2) The manufactured test piece (W) in Manufacturing Example 23, was applied with the marking ink onto the manufactured test piece (M) of the laser-transmissible resin workpiece.
(3) The manufactured test piece (X) in Manufacturing Example 24, was applied with the marking ink onto the test piece (F) manufactured as the laser-transmissible resin workpiece.
(4) The manufactured test piece (Y) in Manufacturing Example 25, was applied with the marking ink onto the test piece (A) manufactured as the laser-transmissible resin workpiece.
(5) The manufactured test piece (Z) in Manufacturing Example 26, was applied with the marking ink onto the test piece (C) manufactured as the laser-transmissible resin workpiece.

Examples 1 to 10 of the method for the laser welding using the manufactured test pieces in above-mentioned Manufacturing Examples with applying the present invention, are explained. Comparative Example 1 of the method for laser welding without applying the present invention is explained.

As shown in Fig. 1, the stair 5 of the test piece 2 and the stair 4 of the above-mentioned test piece 1 were put together. The diode laser machine having 30 W of the output power that is available form Fine Device Co., Ltd. was used.

The scanning laser beam 3 of the continuous wavelength of 840 nm was irradiated to destination of an indicated narrow onto the put portion by the machine under 750 mm/min. of the scanning speed from above.

The laser beam 3 transmitted through the test piece 1, and was absorbed into the test piece 2 to cause the exothermic.
The exothermic melted the test pieces 1 and 2 at a laser-absorbing neighborhood. And the both pieces 1 and 2 were fused to weld and join.

(Determination of tensile strength)

As regards the welded pieces of Examples, they were tensed under 10 mm/min. of tensile speed to both opposite dimensions of lengthwise of the laser-transmissible test piece 1 side and the laser-absorptive test workpiece 2 side: the dimensions pulled the piece 1 and the piece 2 apart in accordance with Japanese Industrial Standards K 7113-1995 using a tensile strength tester of catalog No. AG-50kNE that is available from Shimadzu Corporation, to determine the tensile strength of welding by the tensile strength test. The results thereof are shown in Table 6.

(Evaluation of welding)

The cross section at the laser welded position was evaluated by visual observation to classify into 2 grades. When the position of scanning the laser beam was welded quite uniformly, it is indicated with "o". When the position of scanning the laser beam was not welded uniformly, it is indicated with "x". The results thereof are shown in Table 6.

Table 6

|  | Test Piece of Laser-transmissible Resin Workpiece | Test Piece of Laser-absorptive Resin Workpiece | Determination of Tensile Strength(N) | Evaluation of Welding |
|---|---|---|---|---|
| Example 1 | Manufactured Test Piece (A) | Manufactured Test Piece (Y) | 204 | o |
| Example 2 | Manufactured Test Piece (J) | Manufactured Test Piece (S) | 250 | o |
| Example 3 | Manufactured Test Piece (K) | Manufactured Test Piece (V) | 215 | o |
| Example 4 | Manufactured Test Piece (M) | Manufactured Test Piece (T) | 328 | o |
| Example 5 | Manufactured Test Piece (M) | Manufactured Test Piece (W) | 285 | o |
| Example 6 | Manufactured Test Piece (J) | Manufactured Test Piece (R) | 245 | o |
| Example 7 | Manufactured Test Piece (M) | Manufactured Test Piece (R) | 298 | o |
| Example 8 | Manufactured Test Piece (I) | Manufactured Test Piece (S) | 185 | o |
| Example 9 | Manufactured Test Piece (F) | Manufactured Test Piece (V) | 275 | o |

Table continued

| | Test Piece of Laser-transmissible Resin Workpiece | Test Piece of Laser-absorptive Resin Workpiece | Determination of Tensile Strength(N) | Evaluation of Welding |
|---|---|---|---|---|
| Example 10 | Manufactured Test Piece (F) | Manufactured Test Piece (X) | 267 | o |
| Example 11 | Manufactured Test Piece (C) | Manufactured Test Piece (Z) | 350 | o |
| Comparative Example 1 | Comparative Test Piece (a) | ManufacturedTest Piece (S) | - | Not Welded |
| Comparative Example 2 | Comparative Test Piece (b) | Manufactured Test Piece (V) | - | Not Welded |
| Comparative Example 3 | Manufactured Test Piece (R) | Manufactured Test Piece (S) | - | Not Welded |

(Determination of color difference)

The color difference between the test piece of the laser-transmissible resin workpiece and the test piece of the laser-absorptive resin workpiece at the positions having the thickness of 2 mm respectively as shown Fig. 2 was determined by the color difference meter of catalog No. JP7000 that is available from JUKI Corporation. The results of the determination of the color difference with the combination of the pieces in Examples 1 to 4, 7 to 9 and Comparative Example 1 are shown in Table 7.

Table 7

| Examples | Color Difference |
|---|---|
| Combination in Example 1 | 0.04 |
| Combination in Example 2 | 0.02 |
| Combination in Example 3 | 0.03 |
| Combination in Example 4 | 0.02 |
| Combination in Example 7 | 0.03 |
| Combination in Example 8 | 0.01 |
| Combination in Example 9 | 0.02 |
| Combination in Comparative Example 1 | 0.5 |

As shown in Table 7, the laser-transmissible resin workpieces of Examples exhibit the whitish hue, and are joined strongly because of the excellent transmission of the laser thereof.

The method for the laser welding is suitable for joining of workpieces of the thermoplastic housings of whitish product, that should be joined precisely, such as a precision instrument, electric parts, an electrical appliance, a medical device and daily necessities simply and tightly.

**Claims**

**1.** A method for laser welding comprising:

forming a laser-transmissible resin workpiece exhibiting whitish hue of white, gray or tint color out of a resin composition which includes 100 parts by weight of a thermoplastic resin and 0.1 to 2 parts by weight of white pigment having 2 to 2.8 of reflectance,
piling a resin workpiece being at least partly capable of laser-absorption onto the laser-transmissible resin workpiece,

and then irradiating a laser beam thereto to weld them thermally.

2. The method for the laser welding according to claim 1, wherein the resin workpiece being at least partly capable of the laser-absorption is formed out of a resin composition which includes 99.1 to 98 parts by weight of a thermoplastic resin and 0.1 to 2 parts by weight of white pigment having 2 to 2.8 of reflectance, and exhibits whitish hue of white, gray or tint color.

3. The method for the laser welding according to claim 1, wherein the resin workpiece being at least partly capable of the laser-absorption comprises a laser-absorptive layer including an laser-absorbent being capable of laser-absorption under region of wavelength of 800 to 1200 nm at least partially and a whitish resin material that the layer is applied thereto.

4. The method for the laser welding according to claim 1, wherein the laser-transmissible resin workpiece has 1.5 to 1.8 of the reflectance.

5. The method for the laser welding according to claim 3, wherein a color difference: ΔE between the laser-transmissible resin workpiece and the whitish resin material of the resin workpiece being at least partly capable of the laser-absorption is at most 0.3.

6. The method for the laser welding according to claim 1, wherein an average particle size of the white pigment in the laser-transmissible resin workpiece is 100 to 300 nm.

7. The method for the laser welding according to claim 3, wherein the laser-absorptive layer is prepared by applying ink and/or paint including the laser-absorbent.

8. The method for the laser welding according to claim 7, wherein a principal solvent in the ink and/or the paint is an alcohol solvent or a glycol solvent.

9. The method for the laser welding according to claim 3, wherein the laser-absorptive layer is a resin film including the laser-absorbent.

10. The method for the laser welding according to claim 3, wherein the laser-absorbent is carbon black and/or nigrosine.

11. The method for the laser welding according to claim 1, wherein the laser beam is irradiated with scanning, and furnishes an energy quantity: x (J/mm) that satisfies the following numerical expression

$$x = \frac{p \times T}{100 \times q} \geqq 0.9$$

[in the numerical expression, p (W) is output power of the laser beam, q (mm/sec.) is scanning speed of the laser beam, T is transmittance of the laser-transmissible resin workpiece under wavelength of the laser beam].

# Fig. 1

# Fig. 2

Fig. 3

## INTERNATIONAL SEARCH REPORT

International application No.

PCT/JP2004/011732

| A. CLASSIFICATION OF SUBJECT MATTER |
|---|
| Int.Cl⁷ B29C65/16, C08K3/22, C08L101/00 |

According to International Patent Classification (IPC) or to both national classification and IPC

| B. FIELDS SEARCHED |
|---|
| Minimum documentation searched (classification system followed by classification symbols)<br>Int.Cl⁷ B29C65/00-65/82, C08K3/00-13/08, C08L1/00-101/14 |

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 2000-309694 A (Ticona GmbH.),<br>07 November, 2000 (07.11.00),<br>Claims; Par. No. [0012]<br>& US 2002/0002225 A1<br>Par. No. [0051]; Claims<br>& DE 19906828 A1  & EP 1029650 A1 | 1-11 |
| A | JP 2003-517075 A (Bayer AG.),<br>20 May, 2003 (20.05.03),<br>& AU 200120040 A  & BR 200016387 A<br>& CZ 200202080 A3  & DE 19960104 A1<br>& EP 1240243 A1  & EP 1258506 A1<br>& ES 2210021 T3  & HU 200203827 A2<br>& KR 2002063908 A  & MX 2002005872 A1<br>& SK 200200811 A3  & US 2003/0125429 A1<br>& WO 2001/044357 A1  & ZA 200204239 A | 1-11 |

☒ Further documents are listed in the continuation of Box C.  ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 04 October, 2004 (04.10.04) | 19 October, 2004 (19.10.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

<table>
<tr><td colspan="3" align="center">**INTERNATIONAL SEARCH REPORT**</td><td>International application No.<br>PCT/JP2004/011732</td></tr>
<tr><td colspan="4">C (Continuation). DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>A</td><td colspan="2">JP 9-510930 A (Marquardt GmbH.),<br>04 November, 1997 (04.11.97),<br>& DE 19510493 A1      & EP 751865 A1<br>& ES 2119415 T3      & US 5893959 A<br>& WO 1995/026869 A1</td><td>1-11</td></tr>
<tr><td>A</td><td colspan="2">JP 11-170371 A (Sakae Riken Kogyo Kabushiki Kaisha),<br>29 June, 1999 (29.06.99),<br>(Family: none)</td><td>1-11</td></tr>
</table>

Form PCT/ISA/210 (continuation of second sheet) (January 2004)